# EUROPEAN PATENT SPECIFICATION

(11) **EP 2 271 706 B1**
(45) Date of publication and mention of the grant of the patent: **21.09.2016**
(21) Application number: 09718745.4
(22) Date of filing: 11.03.2009
(51) Int. Cl.: C08K 7/24, C08L 63/02, C08J 5/00, C08K 3/04

(54) **EPOXY RESIN BASED COMPOSITION AND METHOD FOR THE CURING THEREOF**
AUS EPOXIDHARZ BASIERENDE ZUSAMMENSETZUNG UND VERFAHREN ZU IHRER HÄRTUNG
COMPOSITION À BASE DE RÉSINE ÉPOXY ET PROCÉDÉ DE DURCISSEMENT ASSOCIÉ

(30) Priority: 13.03.2008 IT TO20080191
(43) Date of publication of application: 12.01.2011
(73) Proprietor: Leonardo S.p.A., 00195 Roma (IT)
(72) Inventor: VITTORIA, Vittoria, I-80128 Napoli (Napoli) (IT); GUADAGNO, Liberata, 84084 Fisciano (Salerno) (IT); SORRENTINO, Andrea, I-80036 Palma Campania (Napoli) (IT); RAIMONDO, Marialuigia, I-84025 Eboli (S alerno) (IT); NADDEO, Carlo, I-84098 Pontecagnano Faiano (Salerno) (IT); VERTUCCIO, Luigi, I-84038 Teggiano (Salerno) (IT); IANNUZZO, Generoso, I-83100 Avellino (IT); RUSSO, Salvatore, I-80010 Quarto (Napoli) (IT); CALVI, Erika, I-83026 Montoro Superiore (Avellino) (IT)
(74) Representative: Gerbino, Angelo
(86) International application number: PCT/IB2009/051009
(87) International publication number: WO 2009/113027

(56) References cited:
- WO-A-2007/102980
- FR-A- 2 883 879
- XIE H ET AL: "Cure kinetics of carbon nanotube/tetrafunctional epoxy nanocomposites by isothermal differential scanning calorimetry" JOURNAL OF POLYMER SCIENCE, PART B: POLYMER PHYSICS 20041015 JOHN WILEY AND SONS INC. US, vol. 42, no. 20, 15 October 2004 (2004-10-15), pages 3701-3712, XP002531434
- TAO K ET AL: "Effects of carbon nanotube fillers on the curing processes of epoxy resin-based composites" JOURNAL OF APPLIED POLYMER SCIENCE 20061215 JOHN WILEY AND SONS INC. US, vol. 102, no. 6, 15 December 2006 (2006-12-15), pages 5248-5254, XP002531435
- LIU L ET AL: "Rubbery and glassy epoxy resins reinforced with carbon nanotubes" COMPOSITES SCIENCE AND TECHNOLOGY, ELSEVIER, vol. 65, no. 11-12, 1 September 2005 (2005-09-01), pages 1861-1868, XP004973284 ISSN: 0266-3538

## Description

The present invention relates to epoxy resin based compositions.

Epoxy resins are monomers or prepolymers which, in the presence of curing agents, react to form cured products having a good combination of properties such as heat resistance and mechanical strength, adhesion and abrasion resistance. Thanks to this, they have found a wide range of applications, for example as protective coatings, electrical insulating materials, structural adhesives and matrices for composite materials.

Curing agents may be subdivided into three main classes:
- agents containing active hydrogen, which initiate a curing process based on polyaddition reactions,
- ionic agents, both anionic and cationic, and
- crosslinking agents, which initiate a curing process which proceeds by means of coupling reactions exploiting the hydroxy functionality of the prepolymers.

The curing agent selected has a major impact on the properties of the final cured product. For example, using di(4-aminophenyl) sulphone (DDS) (cf. US 4,331,582) gives rise to cured products which have an elevated glass transition temperature (Tg), but are fragile and subject to a decline in mechanical properties in the presence of moisture.

Patents US 3,397,177, US 3,963,667 and US 3,983,092 in turn describe epoxy resins cured with primary and secondary amine compounds in such a manner as to obtain rigid products with an elevated Tg.

Another parameter which has a distinct influence on the properties of the cured product is the epoxy equivalent weight, i.e. the weight of resin per epoxy group, which may be used as the basis for calculating the stoichiometric ratio between epoxy groups and reactive groups of the curing agent.

The object of the present invention is to provide epoxy resin compositions which are improved over conventional such compositions.

According to the invention, said object is achieved thanks to a composition comprising at least one epoxy resin, carbon nanotubes in a quantity of between 0.1 and 10 parts by weight per 100 parts of epoxy resin and at least one epoxy resin curing agent in a quantity of between 5 and 50 parts by weight per 100 parts of epoxy resin.

Thanks to the simultaneous presence of the carbon nanotubes, the quantities of curing agent used in the compositions of the invention are reduced, so as to minimize production costs and the problems associated with handling harmful substances.

The above-stated curing agent is preferably present in a quantity of between 20 and 40 parts by weight per 100 parts of epoxy resin, while the carbon nanotubes are present in a quantity of between 0.1 and 3 parts by weight per 100 parts of epoxy resin.

The present invention further provides a method for curing a composition of the above-stated type comprising the phases of:
- mixing epoxy resin, carbon nanotubes and curing agent, and
- heating the mixture to a temperature of between 100 and 250°C.

It should be noted that the presence of the carbon nanotubes makes it possible to carry out the curing process at temperatures substantially lower than those conventionally used.

The above-stated heating phase preferably has a duration of between 0.5 and 5 hours.

The present invention further provides a cured product obtainable by subjecting a composition of the above-stated type to the curing method just described.

The cured products according to the invention have excellent mechanical and thermal properties and are distinguished by an elevated glass transition temperature, indicative of a greater percentage of actually cured resin, and by low water absorption. Furthermore, thanks to the presence of the nanotubes, they have electrical and magnetic properties which can be tailored as a function of the concentration of said nanotubes, so widening the field of application.

Some examples of compositions according to the invention and by way of comparison will now be provided. Unless stated otherwise, percentages should be deemed to be stated by weight.

The epoxy resin used in the examples is a bisphenol A diglycidyl ether (DGEBA) supplied by Sigma-Aldrich. Said resin is formed by a condensation reaction between epichlorohydrin and bisphenol A, catalyzed by a base (NaOH). The reaction is carried out with an excess of epichlorohydrin in such a manner as to restrict the production of high molecular weight products in accordance with the following scheme: 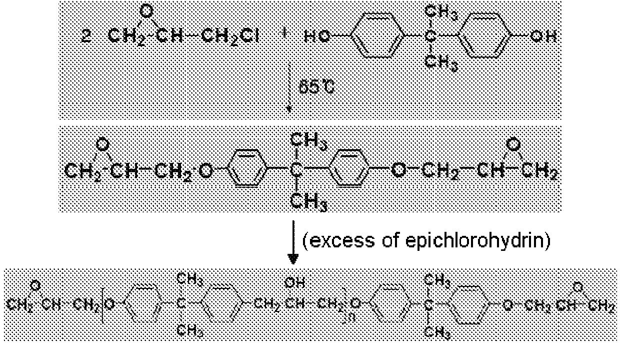 0 ≤ n ≤ 20

In general, n may vary from 0 to 20 in a DGEBA resin. As n increases, the resin becomes more viscous and, when n is greater than or equal to 2, the product is solid. The resin used is primarily composed of 87-88% diglycidyl ethers with n=0, 11% with n=1 and 1-2% with n=2. This mixture gives rise to a resin with an average molecular weight of approx. 370 g/mol, an epoxy equivalent weight (EEW) of 180-200, a viscosity at 25°C of 1000-1800 Pa·s and density of 969 kg/m³ with a resultant overall n value approximately equal to 0.2.

The curing agent selected was a primary aromatic diamine, DDS, represented by the formula:

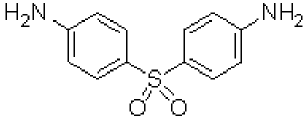

The nanotubes used were non-functionalized "multi-walled" nanotubes produced by Nanocyl.

The epoxy resin was initially heated to between 50 and 80°C and then degassed for 45 min at 70°C in an oven under a vacuum. The resin was then divided into two parts, into one of which was incorporated 1% of nanotubes by sonication for a period of 20 minutes.

Separate fractions of the two parts of resin (respectively with and without nanotubes), placed in an oil bath at 125°C, were combined with DDS in different quantities of 25%, 50%, 70%, 85% and 100% of the stoichiometric quantity, calculated relative to the epoxy equivalent weight. Mixing was then performed with a magnet (400 rpm) for approx. one hour until a clear solution was obtained. The various compositions obtained (5 with nanotubes and 5 without nanotubes, with different concentrations of curing agent) were cured by keeping them in an oven at 150°C for 1 hour and then at 220°C for 3 hours.

On completion of the curing process, the samples obtained were subjected to thermal and dynamic mechanical analysis to determine the Tg and the "storage" modulus. Tg is deemed to indicate the percentage curing of the resin, in other words, the higher is the Tg value, the greater is the percentage curing of the resin.

Table I below shows the Tg value of all the samples under examination obtained both thermally (DSC) and mechanically (DMA).

**TABLE I**

| SAMPLE | Without nanotubes | | With 1% nanotubes | |
|---|---|---|---|---|
| Percentage of catalyst relative to stoichiometric value | Tg by DSC (°C) | Tg by DMA (°C) | Tg by DSC (°C) | Tg by DMA (°C) |
| 25% | 13.3 | - | 25 | - |
| 50% | 76.7 | 112.6 | 92.5 | 117.4 |
| 70% | 145.3 | 163.4 | 156.7 | 173.9 |
| 85% | 181.7 | 201.1 | 208.3 | 223.6 |
| 100% | 235 | 235.2 | 239.2 | 236.1 |

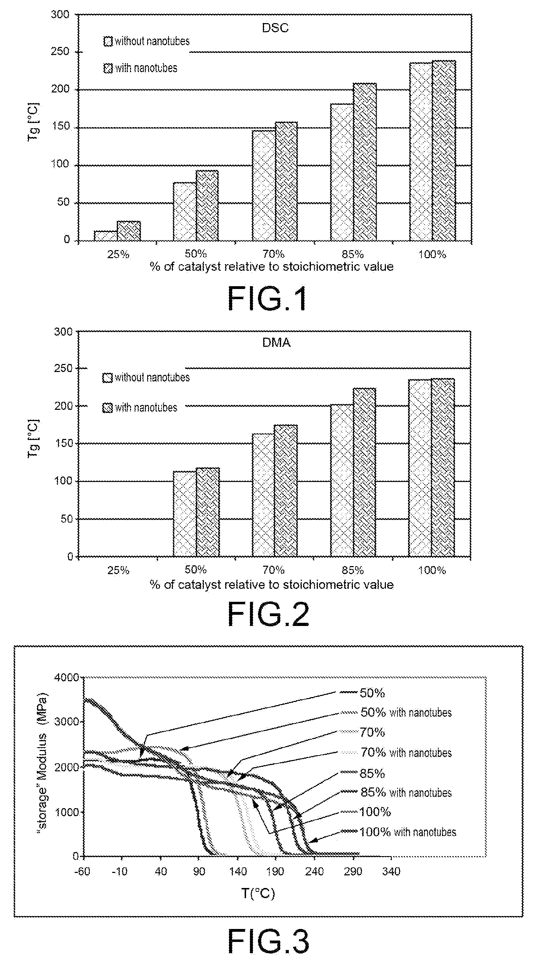

The data from Table I are plotted on graphs in Figures 1 and 2, which relate respectively to DSC and DMA. It is immediately clear from these figures that, in the presence of non-stoichiometric quantities of curing agent, the Tg of the compositions containing 1% of nanotubes is higher than that of those containing none, in particular in the case of those containing 85% of curing agent.

In turn, Figure 3 shows the curves for various compositions which illustrate the profile of "storage" modulus as a function of temperature. This figure clearly shows the beneficial effect of the nanotubes in the presence of non-stoichiometric quantities of curing agent.

## Claims

1. Composition comprising at least one epoxy resin which is a bisphenol A diglycidyl ether (DGEBA), carbon nanotubes in a quantity of between 0.1 and 10 parts by weight per 100 parts of epoxy resin, and at least one curing agent of the epoxy resin which is di(4-aminophenyl)sulphone (DDS) in a quantity of between 5 and 50 parts by weight per 100 parts of epoxy resin in a non-stoichiometric quantity calculated relative to the epoxy equivalent weigh.

2. Composition according to Claim 1, in which said curing agent is selected from the group consisting of amines and polyamines, in particular primary, secondary and tertiary diamines.

3. Composition according to any of the preceding claims, in which said curing agent is present in a quantity of between 20 and 40 parts by weight per 100 parts of epoxy resin.

4. Composition according to any of the preceding claims, in which said carbon nanotubes are present in a quantity of between 0.1 and 3 parts by weight per 100 parts of epoxy resin.

5. Method of curing a composition according to any of the preceding claims, comprising the phases of:
- mixing epoxy resin, carbon nanotubes and curing agent, and
- heating the mixture to a temperature of between 100 and 250°C.

6. Method according to Claim 5, in which said heating phase has a duration of between 0.5 and 5 hours.

7. Cured product obtainable by subjecting a composition according to any of Claims 1 to 4 to a method according to Claim 5 or 6.

## Patentansprüche

1. Zusammensetzung, umfassend mindestens ein Epoxidharz, welches ein Bisphenol-A-diglycidylether (DGEBA) ist, Kohlenstoff-Nanoröhrchen in einer Menge zwischen 0,1 und 10 Gewichtsteilen pro 100 Teile Epoxidharz und mindestens ein Härtungsmittel für das Epoxidharz, welches Di(4-aminophenyl)sulfon (DDS) ist, in einer Menge zwischen 5 und 50 Gewichtsteilen pro 100 Teile Epoxidharz in einer nicht-stöchiometrischen Menge, bezogen auf das Epoxidäquivalentgewicht berechnet.

2. Zusammensetzung gemäß Anspruch 1, wobei das Härtungsmittel ausgewählt ist aus der Gruppe bestehend aus Aminen und Polyaminen, insbesondere primären, sekundären und tertiären Diaminen.

3. Zusammensetzung gemäß einem der vorhergehenden Ansprüche, wobei das Härtungsmittel in einer Menge zwischen 20 und 40 Gewichtsteilen pro 100 Teile Epoxidharz vorliegt.

4. Zusammensetzung gemäß einem der vorhergehenden Ansprüche, wobei die Kohlenstoff-Nanoröhrchen in einer Menge zwischen 0,1 und 3 Gewichtsteilen pro 100 Teile Epoxidharz vorliegen.

5. Verfahren zum Härten einer Zusammensetzung gemäß einem der vorhergehenden Ansprüche, umfassend die Phasen des:
- Mischens von Epoxidharz, Kohlenstoff-Nanoröhrchen und Härtungsmittel und
- Erwärmens des Gemischs auf eine Temperatur zwischen 100 und 250°C.

6. Verfahren gemäß Anspruch 5, wobei die Erwärmungsphase eine Dauer zwischen 0,5 und 5 Stunden hat.

7. Gehärtetes Produkt, erhältlich durch Aussetzen einer Zusammensetzung gemäß einem der Ansprüche 1 bis 4 einem Verfahren gemäß Anspruch 5 oder 6.

## Revendications

1. Composition comprenant au moins une résine époxy qui est un diglycidyl éther de bisphénol A (DGEBA), des nanotubes de carbone en une quantité comprise entre 0,1 et 10 parties en poids pour 100 parties de résine époxy, et au moins un agent de durcissement de la résine époxy qui est la di(4-aminophényl)sulfone (DDS) en une quantité comprise entre 5 et 50 parties en poids pour 100 parties de résine époxy en une quantité non stoechiométrique calculée relativement au poids équivalent époxy.

2. Composition selon la revendication 1, dans laquelle ledit agent de durcissement est sélectionné dans le groupe constitué des amines et des polyamines, en particulier des diamines primaires, secondaires et tertiaires.

3. Composition selon l'une quelconque des revendications précédentes, dans laquelle ledit agent de durcissement est présent en une quantité comprise entre 20 et 40 parties en poids pour 100 parties de résine époxy.

4. Composition selon l'une quelconque des revendications précédentes, dans laquelle lesdits nanotubes de carbone sont présents en une quantité comprise entre 0,1 et 3 parties en poids pour 100 parties de résine époxy.

5. Procédé de durcissement d'une composition selon l'une quelconque des revendications précédentes, comprenant les phases de :
- mélange de la résine époxy, des nanotubes de carbone et de l'agent de durcissement, et
- chauffage du mélange à une température comprise entre 100 et 250°C.

6. Procédé selon la revendication 5, dans lequel ladite phase de chauffage a une durée comprise entre 0,5 et 5 heures.

7. Produit durci pouvant être obtenu par soumission d'une composition selon l'une quelconque des revendications 1 à 4 à un procédé selon la revendication 5 ou 6.
